# EUROPÄISCHE PATENTSCHRIFT

(11) **EP 3 824 207 B1**
(45) Veröffentlichungstag und Bekanntmachung des Hinweises auf die Patenterteilung: **10.01.2024**
(21) Anmeldenummer: 19742707.3
(22) Anmeldetag: 16.07.2019
(51) Int. Cl.: F16K 1/46, F16J 15/02, F16J 15/06, F16J 15/10, F16K 1/38

(54) **HUBVENTIL UND DICHTUNG**
LIFTING VALVE AND SEAL
SOUPAPE DE LEVAGE ET JOINT D'ÉTANCHÉITÉ

(30) Priorität: 19.07.2018 DE 102018005699
(43) Veröffentlichungstag der Anmeldung: 26.05.2021
(73) Patentinhaber: GEA Tuchenhagen GmbH, 21514 Büchen (DE)
(72) Erfinder: BURMESTER, Jens, 23883 Grambek (DE); PIEPLOW, Jörg, 23919 Rondeshagen (DE); SÜDEL, Matthias, 23626 Ratekau (DE); WALDEMANN, Nils, 19258 Nostorf (DE)
(74) Vertreter: Hauck Patentanwaltspartnerschaft mbB
(86) Internationale Anmeldenummer: PCT/EP2019/069080
(87) Internationale Veröffentlichungsnummer: WO 2020/016211

(56) Entgegenhaltungen:
- DE-A1- 2 403 773
- DE-A1- 10 023 582
- DE-A1-102015 215 089
- DE-B- 1 098 311
- DE-B- 1 110 483
- US-A- 2 260 381
- US-A1- 2014 203 201
- US-B2- 8 317 498

## Beschreibung

Die Erfindung betrifft ein Hubventil nach dem Oberbegriff des ersten Anspruchs.

Ein Ventil, unter anderem Hubventil, besitzt ein Schließelement, das mit einem Ventilsitz in dichtenden Kontakt bringbar ist, um in einer Schließstellung eine Sperrwirkung zu erzielen. Diese wird oft mit Hilfe einer Dichtung unterstützt, die am Schließelement angeordnet ist und in der Schließstellung mit dem Ventilsitz zusammenwirkt.

Gattungsgemäße Hubventile werden vielfach zur Strömungssteuerung von Getränken und Lebensmitteln sowie Produktvorstufen und Produkte der Pharmazie und Biotechnologie eingesetzt.

Es ist bekannt, solche Dichtungen als Dichtringe auszuführen, deren Querschnitt vom einfachen Rundschnurring abweicht. So finden beispielsweise an trapezoide Formen angelehnte Querschnitte Verwendung oder es werden Querschnitte in Form eines V eingesetzt.

Eine Dichtung mit einem im wesentlichen C-förmigen Querschnitt wird in der DE 10 2010 030 300 A1 vorgestellt. Damit diese Dichtung ihre Funktion erfüllt, ist zusätzlich ein formstabiler Stützring vorgesehen, der wenigstens teilweise in der C-Form aufgenommen ist.

Aus US 2 260 381 A ist ein Dichtungsring bekannt mit einem in einer in einem ersten Teil ausgebildeten ersten Nut angeordneten ersten Schenkel sowie einem in einer zwischen erstem Teil und einem zweiten Teil gebildeten zweiten Nut befindlichen zweiten Schenkel. Außerdem umfasst die Dichtung einen in einem ebenfalls zwischen erstem Teil und zweitem Teil ausgebildeten Klemmspalt angeordneten dritten Schenkel.

Aus DE 100 23 582 A1 ist ein Ventil mit elastischen Dichtelementen vorgesehen. Durch eine elastische Dehnbarkeit der Dichtelemente soll das Ventilglied mit etwas Kraftaufwand von außen durch den entsprechenden Ventilsitz durchführbar sein und die Dichtelemente sollen im Ventilbetrieb wieder ihre Ursprungsform angenommen haben, so dass die Ventilkammer in der gewünschten Art sicher abgedichtet ist.

Aus DE 24 03 773 A1, das ein Hubventil gemäß dem Oberbegriff des Anspruchs 1 offenbart, ist weiterhin ein Abstechventil mit Unterdruckdichtung für Behälter bekannt, wobei eine an einem Ventilteller befestigte kreisringförmige weiche Ventildichtung an einem metallenen Ventilsitz aufliegt. Die Ventildichtung weist einen Querschnitt auf, dessen dem Ventilsitz zugekehrte Seite in unbelastetem Zustand durch eine konkave Fläche mit nach außen spitz zulaufenden und nach innen konvex abgerundeten Kanten begrenzt ist, wobei an der spitz zulaufenden Kante einerseits und an der konvex abgerundeten Kante andererseits aufliegende und die Achse des Abstechventils in radialen Ebenen schneidenden Geraden eine Kegelfläche bestimmen, deren Kegelwinkel 150° bis 170° beträgt. Ein ähnlicher Dichtungsring ist für einen Wasserhahn bekannt aus DE 1 098 311 B.

Ein weiterer Dichtungsring für einen Wasserhahn ist bekannt aus DE 1 110 483 B. Dabei ist ein Verschlussstück so ausgebildet, dass ein Mantel und ein Kernstück oder mindestens der Mantel im Verhältnis zu dem das Verschlussstück anpressenden Druckstück im Rahmen der elastischen und plastischen Verformung der Dichtung beweglich sind und sich zur Mittelachse des Druckkörpers schräg stellen können.

Aus US 2014/0203201 A1 ist ein Scheibenventil bekannt mit einer Dichtung, bei der sich Schenkelteile lose mit Spiel innerhalb zugeordneter Nuten befinden. Weiterhin ist ein Ring vorgesehen, der die Dichtung in radialer Richtung zusammenzieht und eine Aufweitung der Dichtung erlaubt, wenn eine Ventilscheibe in Schließstellung gebracht wird.

Aus US 8 317 498 B2 ist weiterhin ein Sitzventil einer Pumpenanordnung mit einem verformbaren Dichtungseinsatz bekannt. Der Einsatz weist mindestens einen umlaufenden Abschnitt auf zur Verringerung von Spannungskonzentrationen und zum Erlauben einer Verformung.

Schließlich ist aus DE 10 2015 215 089 A1 ein Doppelsitzventil bekannt mit mehreren Dichtringen.

Es war nun Aufgabe der Erfindung, ein Hubventil zu schaffen, das kostengünstig ist und die an das Hubventil gestellten hygienischen Anforderungen erfüllt.

Diese Aufgabe wird gelöst durch Hubventil mit den Merkmalen des erstens Anspruchs. Die abhängigen Ansprüche geben vorteilhafte Weiterbildungen an.

Das Hubventil besitzt einen ersten Anschluss, einen zweiten Anschluss, einen den ersten Anschluss mit dem zweiten Anschluss verbindenden Durchlass, welcher von einem Ventilsitz umgeben ist, ein Schließelement, welches mit dem Ventilsitz in dichtenden Kontakt bringbar ist, und einen Stellantrieb zum Bewirken des dichtenden Kontakts. Es ist vorgesehen, dass das Schließelement eine Dichtungsanordnung mit einem ersten Teil und einem mit dem ersten Teil lösbar verbundenen zweiten Teil, eine im ersten Teil ausgebildeten ersten Nut, eine zweite Nut und einen Klemmspalt, wobei zweite Nut und Klemmspalt zwischen erstem Teil und zweitem Teil gebildet sind, aufweist. Weiterhin ist vorgesehen, dass eine Dichtung mit einem ersten Schenkel, einem zweiten Schenkel und einem dritten Schenkel in der Dichtungsanordnung aufgenommen und erste Nut, zweite Nut und Klemmspalt mit möglichst hohem Füllgrad ausgefüllt sind, wobei der erste Schenkel in der ersten Nut, der zweite Schenkel in der zweiten Nut und der dritte Schenkel in dem Klemmspalt aufgenommen ist. Die Vorteile dieses Hubventils sind insbesondere zu sehen in einer einfachen Geometrie der Dichtungsanordnung, die mit wenigen Bearbeitungsschritten, beispielsweise Drehen, kostengünstig herstellbar ist, und sehr guten hygienischen Eigenschaften des Hubventils, die aufgrund des hohen Füllgrad und der hoher Abdichtung im Klemmspalt erreicht werden. Da die Dichtung aus dem Schließelement austritt und den Kontakt zum Ventilsitz herstellt, ist eine sehr gute Dichtwirkung des Hubventils gegeben.

Die hygienischen Eigenschaften werden gegenüber dem Stand der Technik durch die Stützung verbessert, die eine Wirkung der Anordnung der Nuten und des Klemmspaltes ist, da sie eine Verpressung der Dichtung in die Nut hinein verhindert.

Stützung und Verformung der Dichtung und damit einhergehend die hygienische Eigenschaft werden verbessert, wenn der Füllgrad von erster Nut, zweiter Nut und Klemmspalt mehr als 95% beträgt.

Eine weitere Verbesserung wird durch einen Füllgrad von erster Nut, zweiter Nut und Klemmspalt von mehr als 98% erreicht.

Der Kraftfluss innerhalb der Dichtung mit nachfolgender Verformung wird verbessert und dadurch eine bessere Dichtwirkung erzielt, indem erste Nut und zweite Nut in einem Winkel von 90° zu einander stehen.

Eine andere Verbesserung der vorgenannten Vorteile wird erreicht, wenn der Klemmspalt in einem Winkel von 135° zur zweiten Nut steht.

Eine kostengünstige, leicht zu fertigende und betriebssichere Verbindung von erstem und zweitem Teil ist in einer Weiterbildung geschaffen, indem zum lösbaren Verbinden von erstem Teil und zweitem Teil das erste Teil einen an ein Ende eines Dehnabschnittes anschließenden Gewindeabschnitt aufweist, welcher in einer am zweiten Teil angeordneten Bohrung aufgenommen ist.

Die Betriebssicherheit der vorgenannten Verbindung wird nochmals erhöht, indem das Schließelement einen Kraftfluss in einem Schließzustand des Ventils an Gewindeabschnitt und Bohrung vorbeiführend ausgeführt ist.

Diese Weiterbildung wird nochmals verbessert, indem eine innere Weite des Ventilsitzes mindestens so groß wie eine äußere Weite des ersten Teiles ist. Hierdurch wird ein Einwirken der Schließkraft auf die Schraubverbindung verhindert. Gemäß einer anderen Weiterbildung wird vorgeschlagen, dass im Durchlass ein Vorsprung vorgesehen ist, der eine Engstelle mit einer inneren Weite schafft, die kleiner ist als eine äußere Weite des ersten Teils. Dies verhindert einen Durchtritt des ersten Teils durch den Durchlass.

Erfindungsgemäß umfasst die Dichtung einen Ring, welcher einen Querschnitt mit einem Kern, dem ersten Schenkel, dem zweiten Schenkel und dem dritten Schenkel aufweist, wobei die Schenkel von dem Kern abzweigen und der erste Schenkel zu einer Mitte des Ringes weist, mit dem zweiten Schenkel ein Paar bildet und der dritte Schenkel an einer dem Paar gegenüberliegenden Seite des Kernes angeordnet ist, wobei der dritte Schenkel eine geringere Stärke als der erste und der zweite Schenkel besitzt. Diese Dichtung schafft eine hohe Dichtwirkung und sehr gute Beständigkeit gegen Verkeimung. Sie ist kostengünstig herstellbar und einfach montierbar.

Eine sehr gute Füllung der Dichtungsanordnung mit Verbesserung der Dichtwirkung der Beständigkeit gegen Verkeimung wird erreicht, indem wenigstens einer von erstem und zweitem Schenkel eine Verjüngung aufweist, mit der eine Weite des Schenkels vom Kern zum freien Ende hin abnimmt.

Erfindungsgemäß stehen erster Schenkel und zweiter Schenkel in einem Winkel von 90° zu einander.

Eine weitere Vertiefung der Vorteile schafft eine Weiterbildung, gemäß der der dritte Schenkel in einem Winkel von 135° zum zweiten Schenkel steht.

Eine andere Weiterbildung sieht vor, dass der erste Schenkel im Wesentlichen in einer Ebene liegt, die durch den Kern aufgespannt wird. Dies vereinfacht die Herstellung, verbessert die Montagefreundlichkeit und den Kraftfluss im Schließzustand des Ventils.

Anhand eines Ausführungsbeispiels und seiner Weiterbildungen soll die Erfindung näher erläutert und die Darstellung der Wirkungen und Vorteile vertieft werden.

Es zeigen:
- **Fig. 1:**: Teilschnitt durch ein schematisch dargestelltes Hubventil;
- **Fig. 2:**: Schnitt zeigend einen Teil des Ventiltellers, des Ventilsitzes und die Dichtungsanordnung;
- **Fig. 3:**: Schnitt durch die Dichtung
- **Fig. 4:**: Schnitt zeigend den Bereich mit Ventilteller und Ventilsitz in einer Weiterbildung.

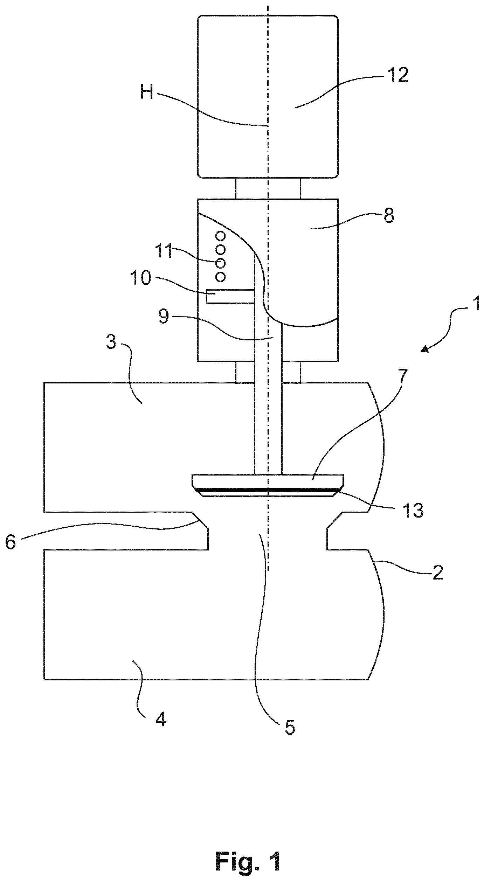

In **Fig. 1** ist ein Ventil **1** schematisch und in teilweisem Schnitt dargestellt. Das Ventil **1** besitzt ein Ventilgehäuse **2,** an welchem ein erster Anschluss **3** und ein zweiter Anschluss **4** vorgesehen sind. Im Ventilgehäuse **2** ist ein Durchlass **5** angeordnet, welcher eine Fluidverbindung zwischen erstem Anschluss **3** und zweitem Anschluss **4** herstellt. Der Durchlass **5** wird von einem Ventilsitz **6** begrenzt. Innerhalb der Ventilgehäuses **2** ist ein Schließelement **7** entlang einer Hubachse H beweglich angeordnet. Dieses Schließelement **7** ist in einen dichtenden Kontakt mit dem Ventilsitz **6** bringbar, um eine Schließstellung des Ventils **1** zu erzeugen, in welcher die Fluidverbindung zwischen erstem Anschluss **3** und zweitem Anschluss **4** durch die gemeinsame Wirkung von Ventilsitz **6** und Schließelement **7** unterbunden ist.

Ein Stellantrieb **8** ist vorgesehen, mit dem die Bewegung des Schließelements **7** bewirkbar ist. Eine Antriebsstange **9** verbindet den Stellantrieb **8** mit dem Schließelement **7.** Der Stellantrieb **8** kann pneumatisch ausgeführt sein und einen Kolben **10** umfassen, der mit Hilfe eines Druckmittels gegen die Kraft einer Feder **11** verschoben wird und so einen Hub erzeugt, der mittels der Antriebsstange **9** auf das Schließelement **7** übertragen wird.

Es kann eine Ventilsteuereinrichtung **12** vorgesehen sein, die den Stellantrieb **8** ansteuert, beispielsweise indem sie den Zufluss des Druckmittels in den Stellantrieb **8** zum Verstellen des Kolbens **10** stellt. Die Ventilsteuereinrichtung **12** kann dazu eingerichtet sein, mit einer Anlagensteuerung direkt oder mittelbar zusammenzuwirken, bspw. durch Rückmelden des Ventilzustandes sowie Empfangen und Umsetzen von Schaltbefehlen.

Am Schließelement **7** ist eine Dichtung **13** vorgesehen, die in der Schließstellung des Ventils **1** in dichtendem Kontakt mit dem Ventilsitz **6** steht.

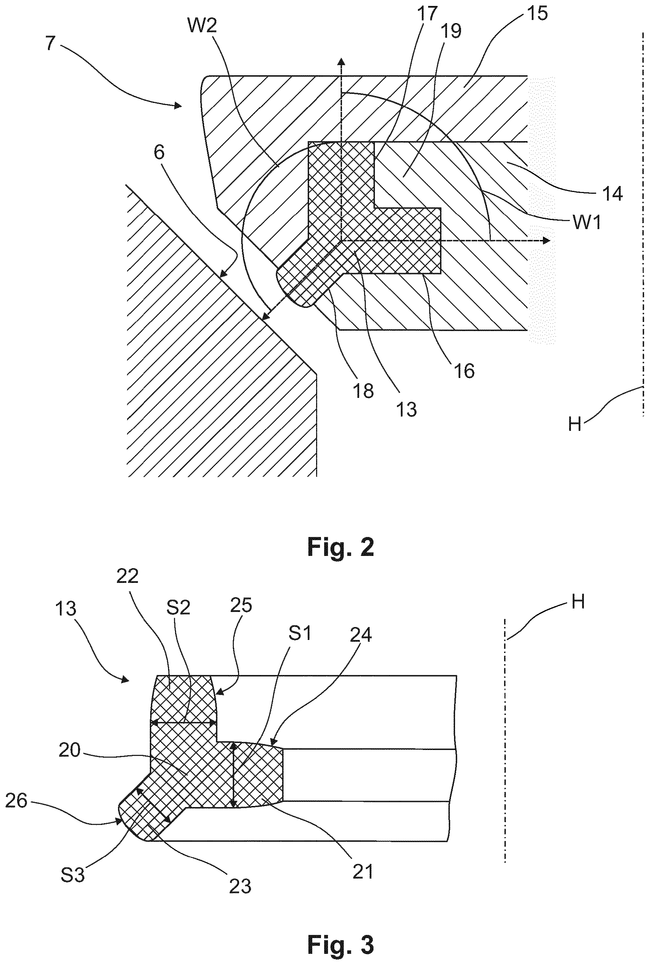

In **Fig. 2** ist eine am Schließelement **7** vorgesehene Dichtungsanordnung im Schnitt gezeigt, in welcher die Dichtung **13** aufgenommen ist.

Die Dichtungsanordnung umfasst ein erstes Teil **14** und ein zweites Teil **15,** die lösbar miteinander verbunden sind, beispielsweise durch Gewinde an beiden Teilen **14** und **15,** die miteinander in Eingriff gebracht sind.

Das Schließelement **7** kann gegenüber einem Innenraum des Ventils **1** durch erstes Teil **14,** zweites Teil **15** und Dichtung **13** vollständig begrenzt sein.

Im ersten Teil **14** ist eine erste Nut **16** ausgeformt, die zur einfachen Herstellung und Gewinnung von Kostenvorteilen im Wesentlichen senkrecht zur Hubachse **H** orientiert ist. Die Nut **16** kann einen rechteckigen Querschnitt besitzen.

Erstes Teil **14** und zweites Teil **15** sind so ausgeformt, dass im zusammengebauten Zustand zwischen ihnen eine zweite Nut **17** ausgeformt ist, die im Wesentlichen zylindrisch um die Hubachse **H** gestaltet ist und einen rechteckigen Querschnitt besitzen kann.

Erste Nut **16** und zweite Nut **17** stehen in einem Winkel **W1** zueinander, der fertigungstechnisch vorteilhaft etwa 90 Winkelgrade betragen kann. Beide Nuten **16** und **17** sind miteinander verbunden. Von der Verbindungsstelle zweigt ein Klemmspalt **18** ab, der zwischen erstem Teil **14** und zweitem Teil **15** ausgebildet ist. Der Klemmspalt **18** steht in einem Winkel **W2** zur zweiten Nut **17,** welcher vorzugsweise etwa 135 Winkelgrade betragen kann.

Zwischen erster und zweiter Nut **16** und **17** ist am Schließelement **7,** beispielsweise am ersten Teil **14** und einstückig mit diesem, ein Stützkörper **19** ausgeformt, der im Wesentlichen zusammen mit dem Klemmspalt **18** auf einer Linie liegt, die vorzugsweise senkrecht auf dem Ventilsitz **6** steht. Der Stützkörper **19** verbessert den Kraftfluss innerhalb der Dichtung **13** bei Belastung in der Schließstellung des Ventils **1,** wenn sich die Dichtung **13** in Kontakt mit dem Ventilsitz **6** befindet. Insbesondere verhindert der Stützkörper **19,** dass die Dichtung **13** vollständig in den Klemmspalt **18** hineingedrückt wird und es zu Eintrag von Fluid in den Klemmspalt **18** kommt. Außerdem sorgt der Stützkörper **19** für eine genaue Ausrichtung der Dichtung **13** in der Dichtungsanordnung.

Die Dichtung **13** ist in erster Nut **16,** zweiter Nut **17** und dem Klemmspalt **18** aufgenommen und füllt diese vorzugsweise so vollständig wie technisch machbar aus. Es wird ein Füllgrad angestrebt, der näher an 100% als an 95% liegt. Dies macht die Dichtungsanordnung besonders hygienisch, da keine Verunreinigungen aufgenommen werden können. Die Dichtung **13** ragt aus dem Klemmspalt **18** in Richtung des Ventilsitzes **6** heraus.

In **Fig. 3** ist ein Querschnitt durch die Dichtung **13** gezeigt.

Die Dichtung **13** weist einen Kern **20** auf, der ringförmig um eine Mittelachse verläuft, welche im eingebauten Zustand weitgehend mit der Hubachse **H** zusammenfällt. Von diesem Kern **20** zweigen im Querschnitt betrachtet ein erster Schenkel **21,** ein zweiter Schenkel **22** und ein dritter Schenkel **23** ab.

Der erste Schenkel **21** liegt im Wesentlichen in einer Ebene, die durch den Kern **20** aufgespannt wird und ragt in Richtung Zentrum des Kernes **20.** Dieser Schenkel wird in der Dichtungsanordnung von der ersten Nut **16** aufgenommen und füllt diese weitgehend aus.

Der zweite Schenkel **22** bildet etwa einen rechten Winkel mit dem ersten Schenkel **21** und wird von der zweiten Nut **17** aufgenommen, wenn die Dichtung **13** in die Dichtungsanordnung eingebaut wird. Der zweite Schenkel **22** füllt dann die zweite Nut **17** weitgehend aus.

Erster Schenkel **21** und zweiter Schenkel **22** bilden aufgrund des Zwischenwinkels ein Paar. Auf der diesem Paar gegenüberliegenden Seite des Kerns **20** ist der dritte Schenkel **23** angeordnet, der im Klemmspalt **18** aufnehmbar ist.

Der erste Schenkel **21** kann in einer vorteilhaften Weiterbildung eine erste Verjüngung **24** aufweisen, mit der eine erste Weite **S1** vom Kern **20** zum freien Ende ersten Schenkels **21** hin abnimmt. Im Maximum ist die erste Weite **S1** größer als der freie Durchmesser des ersten Spalts **16.** Der zweite Schenkel **22** kann eine zweite Verjüngung **25** aufweisen, mit der eine zweite Weite **S2** zum freien hin abnimmt. Die Weite **S2** des zweiten Schenkels ist etwas größer bemessen als die Weite der zweiten Nut **17.** Durch diese Maßnahmen lässt sich eine sehr hohe Füllung der Nuten **16** und **17** erreichen.

Die Weite **S3** des dritten Schenkel **23** ist kleiner als jede der Weiten **S1** und **S2** von erstem und zweitem Schenkel **21** und **22.** Die Weite **S3** ist größer als die Weite des Klemmspaltes **18.** Mit diesen Maßvorgaben wird erreicht, dass ein sicherer Kontakt zwischen drittem Schenkel **23** und Wandung des Klemmspaltes **18** zu jedem Betriebszustand des Ventils **1** gegeben ist, wodurch Ablagerung von Fluid in diesem Bereich verhindert wird.

Der dritte Schenkel **23** weist an seiner Oberfläche, die mit dem Ventilsitz **6** in Berührung kommt, eine Rundung **26** auf. Hierdurch wird eine möglichst linienartige Dichtwirkung der Dichtung **13** erzielt.

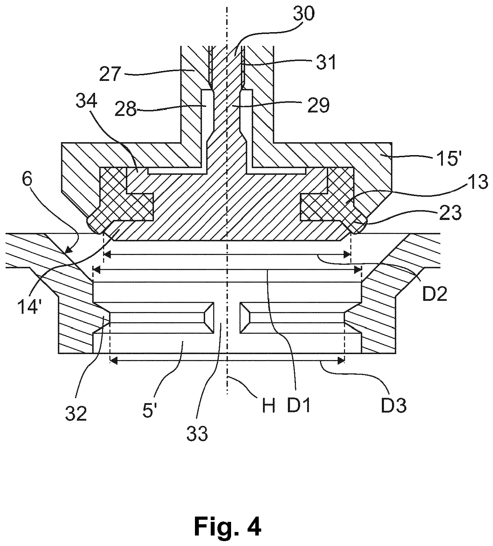

Einen Schnitt durch den Bereich mit Ventilteller und Ventilsitz in einer Weiterbildung zeigt **Fig. 4****.**

Das zweite Teil **15'** weist auf einer dem ersten Teil **14'** abgewandten Seite einen Abschnitt **27** auf, in welchem ein Hohlraum **28** ausgebildet ist. In diesem Hohlraum **28** ist ein Dehnabschnitt **29** des ersten Teils **14'** aufgenommen. An den elastisch dehnbar ausgeführten Dehnabschnitt schließt auf einer dem Ventilsitz abgewandten Seite ein Gewindeabschnitt **30** an, welcher mit einer mit einem Gewinde versehenen Bohrung **31** in Eingriff steht. Durch diesen Eingriff ist eine Schraubverbindung von erstem Teil **14'**und zweitem Teil **15'** hergestellt. Der Dehnabschnitt **29** wirkt wie eine Dehnschraube in dieser Schraubverbindung. Hierdurch ist eine sichere Verschraubung von erstem Teil **14'** und zweitem Teil **15'** miteinander gegeben, die den Verzicht auf Mittel gegen Verdrehen der Teile gegeneinander erlaubt, einfach zu montieren und sicher gegen selbsttätiges Lösen während der Ventilbenutzung ist.

Eine weitere Entlastung der Schraubverbindung und damit eine Vertiefung des vorgenannten Vorteils wird erreicht, indem das Schließelement einen Fluss der Schließkraft im Schließzustand des Ventils an der Schraubverbindung vorbeiführend ausgeführt ist.

In einer günstigen Ausführungsform ist dies erreicht, indem eine innere Weite **D1** des Ventilsitzes **6** mindestens so groß wie eine äußere Weite **D2** des ersten Teiles **14'** ist. Hierdurch sitzt nur die Dichtung **13,** maximal zusammen mit dem zweiten Teil **15`,** auf dem Ventilsitz **6** auf, während das erste Teil **14'** gar nicht aufsitzen kann. Die durch den Stellantrieb **8** eingeleitete Schließkraft wirkt am Schließelement nur auf das zweite Teil **15'** und die Dichtung **13** unter Umgehung der Bohrung **31** sowie des zweiten Teils **14'** mit Dehnabschnitt **29** und Gewindeabschnitt **30.** Somit wird die Verbindung von erstem und zweitem Teil **14`** und **15`** nicht durch die Schließkraft belastet.

Diese Ausführung kann vorteilhaft mit einem Vorsprung **32** kombiniert sein, der im im Durchlass **5'** ausgebildet ist. Dieser Vorsprung **32** bewirkt eine Engstelle mit einer inneren Weite **D3,** die kleiner ist als eine äußere Weite **D2** des ersten Teils **14'.** Dies verhindert, dass das erste Teil **14'** den Durchlass **5'** durchsetzen kann, beispielsweise falls die Verbindung von erstem und zweitem Teil **14'** und **15'** versagen sollte. Der Vorsprung **32** erstreckt sich nur über einen Teil des Umfangs des Durchlasses **5'.** Über den Umfang können mehrere Vorsprünge angeordnet sein. Vorteilhaft ist wenigstens ein Ablauf **33** vorgesehen, der mit einer Wand des Durchlasses **5'** fluchtet. Der Ablauf **33** besitzt eine Gestalt, die ein rückstandsfreies Leerlaufen des Ventils sicherstellt.

Für eine sichere Schraubverbindung, insbesondere mit einem Dehnabschnitt **29,** ist es vorteilhaft, wenn Kontaktflächen an erstem und zweiten Teil **14'** und **15'** geschaffen sind, mit denen sich die Teile **14'** und **15'** aneinander abstützen und gegeneinander verspannt sind. Besonders vorteilhaft ist es, am ersten Teil **14'** einen Absatz **34** zu schaffen, der an einer dem zweiten Teil **15'** zugewandten Seite des ersten Teils **14'** umlaufend angeordnet ist. Der Kontakt der Teile **14'** und **15'** ist auf eine ringförmige Fläche beschränkt. Dies vereinfacht die Fertigung, da ein solcher Absatz einfach und gleichzeitig mit hoher Genauigkeit herstellbar ist. Der Absatz **34** bewirkt eine genaue Formgebung der zweiten Nut **17** und des Klemmspalts **18,** was in einer genauen Fassung und Verformung der Dichtung **13** resultiert.

### Bezugszeichenliste

- 1: Ventil
- 2: Ventilgehäuse
- 3: erster Anschluss
- 4: zweiter Anschluss
- 5, 5': Durchlass
- 6: Ventilsitz
- 7: Schließelement
- 8: Stellantrieb
- 9: Antriebsstange
- 10: Kolben
- 11: Feder
- 12: Ventilsteuereinrichtung
- 13: Dichtung
- 14, 14': erstes Teil
- 15, 15': zweites Teil
- 16: erste Nut
- 17: zweite Nut
- 18: Klemmspalt
- 19: Stützkörper
- 20: Kern
- 21: erster Schenkel
- 22: zweiter Schenkel
- 23: dritter Schenkel
- 24: erste Verjüngung
- 25: zweite Verjüngung
- 26: Rundung
- 27: Abschnitt
- 28: Hohlraum
- 29: Dehnabschnitt
- 30: Gewindeabschnitt
- 31: Bohrung
- 32: Vorsprung
- 33: Ablauf
- 34: Absatz

- H: Hubachse
- W1: erster Winkel
- W2: zweiter Winkel
- S1: erste Stärke
- S2: zweite Stärke
- S3: dritte Stärke
- D1: innere Weite des Ventilsitzes
- D2: äußere Weite des Teils 14
- D3: Weite der Engstelle

## Patentansprüche

1. Hubventil (1) mit einem ersten Anschluss (3), einem zweiten Anschluss (4), einem den ersten Anschluss mit dem zweiten Anschluss verbindenden Durchlass (5; 5'), welcher von einem Ventilsitz (6) umgeben ist, einem Schließelement (7), welches mit dem Ventilsitz (6) in dichtenden Kontakt bringbar ist, einem Stellantrieb (8) zum Bewirken des dichtenden Kontakts, wobei das Schließelement (7) eine Dichtungsanordnung mit einem ersten Teil (14; 14') und einem mit dem ersten Teil (14; 14') lösbar verbundenen zweiten Teil (15; 15'), eine im ersten Teil (14, 14') ausgebildeten ersten Nut (16), eine zweite Nut (17) und einen Klemmspalt (18), wobei zweite Nut (17) und Klemmspalt (18) zwischen erstem Teil (14) und zweitem Teil (15; 15') gebildet sind, aufweist, und eine Dichtung (13) in der Dichtungsanordnung aufgenommen ist, wobei die Dichtung einen Ring umfasst, welcher einen Querschnitt mit einem Kern (20), einem ersten Schenkel (21), einem zweiten Schenkel (22) und einem dritten Schenkel (23) aufweist, wobei die Schenkel (21, 22, 23) von dem Kern (20) abzweigen und der erste Schenkel (21) zu einer Mitte des Ringes weist, mit dem zweiten Schenkel (22) ein Paar bildet, wobei der dritte Schenkel (23) an einer dem Paar gegenüberliegenden Seite des Kernes (20) angeordnet ist, und wobei der erste Schenkel (21 ) in der ersten Nut (16), der zweite Schenkel (22) in der zweiten Nut (17) und der dritte Schenkel (23) in dem Klemmspalt (18) aufgenommen ist, **dadurch gekennzeichnet, dass** erster Schenkel (21) und zweiter Schenkel (22) in einem Winkel (W1) von 90° zueinander stehen, dass der dritte Schenkel (23) eine geringere Stärke als der erste und der zweite Schenkel (21, 22) besitzt, und dass erste Nut (16), zweite Nut (17) und Klemmspalt (18) mit möglichst hohem Füllgrad ausgefüllt sind.

2. Hubventil nach Anspruch 1, **dadurch gekennzeichnet, dass** der Füllgrad von erster Nut (16), zweiter Nut (17) und Klemmspalt (18) mehr als 95% beträgt.

3. Hubventil nach Anspruch 1, **dadurch gekennzeichnet, dass** der Füllgrad von erster Nut (16), zweiter Nut (17) und Klemmspalt (18) mehr als 98% beträgt.

4. Hubventil nach einem der vorhergehenden Ansprüche, **dadurch gekennzeichnet, dass** erste Nut (16) und zweite Nut (17) in einem Winkel (W1) von 90° zu einander stehen.

5. Hubventil nach einem der vorhergehenden Ansprüche, **dadurch gekennzeichnet, dass** der Klemmspalt (18) in einem Winkel (W2) von 135° zur zweiten Nut (17) steht.

6. Hubventil nach einem der vorhergehenden Ansprüche, **dadurch gekennzeichnet, dass** zum lösbaren Verbinden von erstem Teil (14; 14') und zweitem Teil (15;15') das erste Teil (14; 14') einen an ein Ende eines Dehnabschnittes (29) anschließenden Gewindeabschnitt (30) aufweist, welcher in einer am zweiten Teil (15') angeordneten Bohrung (31) aufgenommen ist.

7. Hubventil nach Anspruch 6, **dadurch gekennzeichnet, dass** das Schließelement (7) einen Kraftfluss in einem Schließzustand des Ventils (1) an Gewindeabschnitt (30) und Bohrung (31) vorbeiführend ausgeführt ist.

8. Hubventil nach Anspruch 7, **dadurch gekennzeichnet, dass** eine innere Weite (D1) des Ventilsitzes (6) mindestens so groß wie eine äußere Weite (D2) des ersten Teiles (14; 14') ist.

9. Hubventil nach einem der vorhergehenden Ansprüche, **dadurch gekennzeichnet, dass** im Durchlass (5) ein Vorsprung (32) vorgesehen ist, der eine Engstelle mit einer inneren Weite (D3) schafft, die kleiner ist als eine äußere Weite (D2) des ersten Teils.

## Claims

1. A lift valve (1) having a first connection (3), a second connection (4), a passage (5; 5') which connects the first connection to the second connection and which is surrounded by a valve seat (6), a closing element (7) which can be brought into sealing contact with the valve seat (6), an actuator (8) for bringing about the sealing contact, wherein the closing element (7) has a sealing arrangement having a first part (14; 14') and a second part (15; 15') which is releasably connected to the first part (14; 14'), a first groove (16) configured in the first part (14, 14'), a second groove (17) and a clamping gap (18), wherein the second groove (17) and the clamping gap (18) are formed between the first part (14) and the second part (15; 15'), and a seal (13) is received in the sealing arrangement, wherein the seal comprises a ring which has a cross-section having a core (20), a first leg (21), a second leg (22) and a third leg (23), wherein the legs (21, 22, 23) branch off from the core (20) and the first leg (21) points toward a center of the ring and forms a pair with the second leg (22), wherein the third leg (23) is arranged on a side of the core (20) which is opposite the pair, and wherein the first leg (21) is received in the first groove (16), the second leg (22) is received in the second groove (17) and the third leg (23) is received in the clamping gap (18), **characterized in that** the first leg (21) and the second leg (22) are at an angle (W1) of 90° to one another, the third leg (23) is less thick than the first and the second legs (21, 22), and the first groove (16), the second groove (17) and the clamping gap (18) are filled to the highest possible filling degree.

2. The lift valve according to Claim 1, **characterized in that** the filling degree of the first groove (16), the second groove (17) and the clamping gap (18) is more than 95%.

3. The lift valve according to Claim 1, **characterized in that** the filling degree of the first groove (16), the second groove (17) and the clamping gap (18) is more than 98%.

4. The lift valve according to any one of the preceding claims, **characterized in that** the first groove (16) and the second groove (17) are at an angle (W1) of 90° to one another.

5. The lift valve according to any one of the preceding claims, **characterized in that** the clamping gap (18) is at an angle (W2) of 135° to the second groove (17).

6. The lift valve according to any one of the preceding claims, **characterized in that**, in order to releasably connect the first part (14; 14') and the second part (15; 15'), the first part (14; 14') has a threaded portion (30) which adjoins one end of an expansion portion (29) and which is received in a hole (31) arranged on the second part (15').

7. The lift valve according to Claim 6, **characterized in that** the closing element (7) is designed to guide a flow of force past the threaded portion (30) and the hole (31) in a closed state of the valve (1).

8. The lift valve according to Claim 7, **characterized in that** an inner width (D1) of the valve seat (6) is at least as large as an outer width (D2) of the first part (14; 14').

9. The lift valve according to any one of the preceding claims, **characterized in that** a projection (32) is provided in the passage (5), which projection creates a narrowing having an inner width (D3) which is smaller than an outer width (D2) of the first part.

## Revendications

1. Soupape de levage (1) comprenant un premier raccord (3), un deuxième raccord (4), un passage (5 ; 5') reliant le premier raccord au deuxième raccord, lequel est entouré par un siège de soupape (6), un élément de fermeture (7) susceptible d'être mis en contact étanche avec le siège de soupape (6), un actionneur (8) destiné à produire le contact étanche, dans laquelle l'élément de fermeture (7) présente un ensemble d'étanchéité avec une première partie (14 ; 14') et une deuxième partie (15, 15') reliée de façon amovible à la première partie (14 ; 14'), une première rainure (16) réalisée dans la première partie (14 ; 14'), une deuxième rainure (17) et une fente de serrage (18), dans laquelle la deuxième rainure (17) et la fente de serrage (18) sont formées entre la première partie (14) et la deuxième partie (15, 15'), et un joint d'étanchéité (13) est reçu dans l'ensemble d'étanchéité, dans laquelle le joint d'étanchéité comporte une bague présentant une section transversale avec un noyau (20), une première branche (21), une deuxième branche (22) et une troisième branche (23), dans laquelle les branches (21, 22, 23) dévient à partir du noyau (20) et la première branche (21) est orientée vers un centre de la bague, forme une paire avec la deuxième branche (22), dans laquelle la troisième branche (23) est disposée sur un côté du noyau (20) opposé à la paire, et dans laquelle la première branche (21) est reçue dans la première rainure (16), la deuxième branche (22) dans la deuxième rainure (17) et la troisième branche (23) dans la fente de serrage (18), **caractérisée en ce que**
la première branche (21) et la deuxième branche (22) forment un angle (W1) de 90° entre elles,
**en ce que** la troisième branche (23) présente une épaisseur inférieure à celle de la première et de la deuxième branche (21, 22),
et **en ce que** la première rainure (16), la deuxième rainure (17) et la fente de serrage (18) sont remplies avec un degré de remplissage le plus élevé possible.

2. Soupape de levage selon la revendication 1, **caractérisée en ce que** le degré de remplissage de la première rainure (16), de la deuxième rainure (17) et de la fente de serrage (18) s'élève à plus de 95%.

3. Soupape de levage selon la revendication 1, **caractérisée en ce que** le degré de remplissage de la première rainure (16), de la deuxième rainure (17) et de la fente de serrage (18) s'élève à plus de 98%.

4. Soupape de levage selon l'une des revendications précédentes, **caractérisée en ce que** la première rainure (16) et la deuxième rainure (17) forment un angle (W1) de 90° entre elles.

5. Soupape de levage selon l'une des revendications précédentes, **caractérisée en ce que** la fente de serrage (18) forme un angle (W2) de 135° par rapport à la deuxième rainure (17).

6. Soupape de levage selon l'une des revendications précédentes, **caractérisée en ce que** pour le raccordement amovible de la première partie (14 ; 14') et de la deuxième partie (15, 15'), la première partie (14 ; 14') présente une section filetée (30) prolongeant une extrémité d'une section extensible (29) et reçue dans un alésage (31) disposé sur la deuxième partie (15').

7. Soupape de levage selon la revendication 6, **caractérisée en ce que** l'élément de fermeture (7) est conçu de manière à faire passer un flux de force par la section filetée (30) et l'alésage (31) dans un état de fermeture de la soupape (1).

8. Soupape de levage selon la revendication 7, **caractérisée en ce qu'**une largeur interne (D1) du siège de soupape (6) est au moins aussi grande qu'une largeur externe (D2) de la première partie (14 ; 14').

9. Soupape de levage selon l'une des revendications précédentes, **caractérisée en ce qu'**une saillie (32) créant un rétrécissement avec une largeur interne (D3) inférieure à une largeur externe (D2) de la première partie est prévue dans le passage (5).
